# EUROPÄISCHE PATENTANMELDUNG

(11) **EP 2 945 367 A1**
(43) Veröffentlichungstag der Anmeldung: **18.11.2015**
(21) Anmeldenummer: 15167789.5
(22) Anmeldetag: 15.05.2015
(51) Int. Cl.: H04N 5/232, G06F 3/0488, H04N 7/18

(54) **VORRICHTUNG ZUR STEUERUNG EINER KAMERA**

(30) Priorität: 16.05.2014 AT 503462014
(71) Anmelder: Frequentis AG, 1100 Wien (AT)
(72) Erfinder: Rasin-Streden, Hanno, 2261 Mannersdorf/March (AT)
(74) Vertreter: Wildhack & Jellinek

(57) **Zusammenfassung**

Die Erfindung betrifft eine Vorrichtung zur Steuerung einer Kamera. Diese umfasst einen Touch-Screen (1) umfassend eine Anzeigeeinheit (11) und einen berührungssensitiven Bereich sowie einen Ausgang (14), an dem ein Signal (S) anliegt, das eine Berührungsinformation (t) aufweist. Diese umfasst weiters eine Kamera (2), die mittels einer Stelleinheit (21, 22) neigbar ist. Die Kamera (2) ist an den Touch-Screen (1) angeschlossen. Es ist eine Steuerungseinheit (3) vorgesehen, die an den Ausgang (14) des Touch-Screens (1) angeschlossen ist und der das jeweilige vom Touch-Screen (1) abgegebene Signal (S) zugeführt ist, und die Steuerungseinheit (3) der oder den Stelleinheiten (21, 22) vorgeschaltet ist. Erfindungsgemäß ist vorgesehen
- dass die Steuerungseinheit (3) bei Änderung der bei ihr anliegenden Berührungsinformation (t) die Zeigeposition (P) in einem Zwischenspeicher (31) als Referenzposition (P0) abspeichert,
- dass die Steuerungseinheit (3) einen Richtungsvektor (dP), gemäß dP = P - P0 von der gespeicherten Referenzposition (P0) zur Zeigeposition (P) ermittelt, und
- dass die Steuerungseinheit (3) die Stelleinheiten (21, 22) derart ansteuert, dass die von der oder den Stelleinheiten (21, 22) vollführte Drehgeschwindigkeit (w1, w2) proportional zu den Komponenten des Richtungsvektors (dP) sind.

## Beschreibung

Die Erfindung betrifft eine Vorrichtung und ein Verfahren zur Steuerung einer Kamera.

Aus dem Stand der Technik sind unterschiedliche Arten der Kamerasteuerung bekannt, mit denen es möglich ist, die horizontale und vertikale Ausrichtung der Kamera sowie den Zoom der Kamera einzustellen. Die Ansteuerung erfolgt dabei typischerweise mittels eines Joysticks oder bei neueren Modellen auch mittels einer touchpad-basierten Steuerung. Im Stand der Technik gibt es beispielsweise auch Kamerasteuerungen, bei denen auf dem jeweiligen Touch-Screen ein Referenzpunkt eingezeichnet ist und die Geschwindigkeit der Kameradrehung dadurch festgelegt wird, dass der jeweilige x- bzw. y-Koordinatenabstand der aktuellen Zeigeposition zum festgelegten Referenzpunkt ermittelt wird.

Eine solche Vorrichtung hat den wesentlichen Nachteil, dass eine exakte Positionierung und damit Ansteuerung der Kameras nicht möglich ist, ohne dass auf dem Touch-Screen an der entsprechenden Referenzposition eine Markierung erstellt wird, die dann bei jeder Kameraeinstellung zumindest am Beginn vom jeweiligen Operator gesucht werden muss. Hierdurch wird die Aufmerksamkeit des Operators bei der notwendigen Einstellung der Kamera für einige Zeit beansprucht. Dies kann, insbesondere in kritischen Situationen, dazu führen, dass der Operator dem jeweils relevanten Bereich nicht beachtet, was im schlimmsten Fall zu Unfällen führen kann.

Die Erfindung hat daher die Aufgabe, diese Schwierigkeiten zu überwinden und eine vorteilhafte Kontrolle oder Einstellmöglichkeit zur Verfügung zu stellen, mit der es dem Controller möglich ist, die Kamera auf einfache Weise zu steuern, ohne dass er hierzu notwendigerweise die Referenzposition auf dem Touch-Screen suchen muss.

Die Erfindung betrifft eine Vorrichtung zur Steuerung einer Kamera umfassend einen Touch-Screen umfassend eine Anzeigeeinheit und eine berührungssensitive Oberfläche sowie einen Video-Eingang und einen Ausgang, an dem ein Signal anliegt, das eine Berührungsinformation aufweist, das angibt, ob der Touch-Screen berührt wurde und eine Zeigeposition umfassend zwei Koordinatenwerte aufweist, die angibt, an welcher Stelle der Touch-Screen berührt wurde, eine Kamera, die mittels einer oder mehrerer Stelleinheiten, insbesondere mittels Stellmotoren, horizontal und vertikal neigbar ist, und die einen Video-Ausgang aufweist, an dem das von der Kamera aufgenommene Bild in Form eines Videosignals zur Verfügung steht,
wobei die Kamera an den Touch-Screen angeschlossen oder diesem nachgeschaltet ist und der Touch-Screen zumindest in einem Teilbereich seiner Anzeigeeinheit zumindest einen Teilbereich des von der Kamera, insbesondere zuletzt, aufgenommenen Bilds darstellt,
wobei eine Steuerungseinheit vorgesehen ist, die an den Ausgang des Touch-Screens angeschlossen ist und der das jeweilige vom Touch-Screen abgegebene Signal zugeführt ist, und die Steuerungseinheit der oder den Stelleinheiten vorgeschaltet ist und diese ansteuert.

Erfindungsgemäß ist vorgesehen, dass die Steuerungseinheit bei Änderung der bei ihr anliegenden Berührungsinformation auf einen eine Berührung indizierenden Wert die jeweiligen Koordinatenwerte der Zeigeposition in einem Zwischenspeicher als Referenzposition abspeichert,
- dass die Steuerungseinheit, solange die bei ihr anliegende Berührungsinformation einen eine Berührung indizierenden Wert aufweist, den Richtungsvektor, gemäß dP = P - P₀ von der gespeicherten Referenzposition zur Zeigeposition ermittelt, und
- dass die Steuerungseinheit die Stelleinheiten der Kamera derart ansteuert, dass die von der oder den Stelleinheiten vollführte Drehgeschwindigkeiten in horizontaler Richtung proportional zu einer Komponente des Richtungsvektors ist und dass die Drehgeschwindigkeiten in vertikaler Richtung proportional zur jeweils anderen Komponente des Richtungsvektors ist.

Eine einfache Möglichkeit zum Anhalten der Kamera sieht vor, dass die Steuerungseinheit bei Änderung der bei ihr anliegenden Berührungsinformation auf einen keine Berührung indizierenden Wert die Stelleinheiten deaktiviert und stoppt.

Eine Möglichkeit, die Kamera mit der eingestellten Geschwindigkeit weiterschwenken zu lassen, sieht vor, dass die Steuerungseinheit bei Änderung der bei ihr anliegenden Berührungsinformation auf einen keine Berührung indizierenden Wert die Stelleinheiten mit den von der Steuerungseinheit zuletzt eingestellten Drehgeschwindigkeiten weiter ansteuert.

Eine vorteilhafte Ausgestaltung, die ein Vorteilhaftes Navigieren ermöglicht, wenn der Controller den Touch-Screen in der Hand hält oder mit beiden Händen hält und dies ermöglicht, den Touch-Screen ähnlich einem Game Controller zu bedienen, sieht vor, dass die Steuerungseinheit vom Touch-Screen abgegebene Signale nur dann berücksichtigt, wenn die dem Signal zugeordnete Zeigeposition innerhalb eines vorgegebenen Stellbereichs, vorzugsweise im rechten oder linken unteren Eckbereich oder im rechten oder linken Randbereich des Touch-Screens liegt.

Eine vorteilhafte Steuerung des Zooms oder der Brennweite der Kamera sieht vor, dass der Zoom oder die Brennweite der Kamera einstellbar ist und eine Zoom-Stelleinheit zur Einstellung des Zooms oder der Brennweite der Kamera vorgesehen ist, wobei die Zoom-Stelleinheit der Steuerungseinheit nachgeschaltet ist und die Steuerungseinheit das Vorliegen einer vorab vorgegebenen Betätigungshandlung anhand des Signals detektiert und die Zoom-Stelleinheit zur Einstellung einer Zoomstufe ansteuert.

Eine vorteilhafte, gemeinsame Steuerung von Kameraneigung und Zoom sieht vor, dass ein Zoom-Stellbereich auf dem Touch-Screen vorgegeben ist, der vorzugsweise im selben Bereich angeordnet ist wie der Stellbereich oder zu diesem benachbart angeordnet ist, wobei im Zoom-Stellbereich eine Anzahl von vorgegebenen Zoom-Stellabschnitten mit jeweils einer zugeordneten Zoomstufe vorgegeben sind, und die Steuerungseinheit das Berühren, insbesondere Antippen für eine einen vorgegebenen Schwellenwert unterschreitende Zeitspanne, vorzugsweise von weniger als einer Sekunde, der Zoom-Stellabschnitte detektiert und nach Detektion des Berührens einer der Zoom-Stellabschnitte die Zoom-Stelleinheit zur Einstellung einer dem jeweiligen Zoom-Stellabschnitt zugeordneten Zoomstufe ansteuert.

Eine vorteilhafte Weiterbildung der Erfindung zur Ansteuerung nach Art eines Game Controllers sieht vor, dass der Stellbereich und/oder der Zoom-Stellbereich innerhalb eines kreisförmigen Bereichs, mit einem Radius von insbesondere maximal 10 cm, angeordnet sind, wobei der Mittelpunkt des kreisförmigen Bereichs vorzugsweise im Rand- oder Eckbereich des Touch-Screens liegt oder dass der Mittelpunkt des kreisförmigen Bereichs außerhalb des Touch-Screens liegt und zumindest 20% des kreisförmigen Bereichs jedoch innerhalb des Touch-Screens liegen.

Eine vorteilhafte Unterscheidung zwischen unterschiedlichen Eingaben sowie eine Abgrenzung einer Eingabe zur Steuerung der Neigung der Kamera von anderen Eingaben sieht vor, dass die Steuerungseinheit den Richtungsvektor an die Stelleinheit erst dann weiterleitet, wenn nach der ersten Berührung des Touch-Screens für eine vorgegebene Zeitspanne, insbesondere für mehr als eine Sekunde, die Berührungsinformation die Berührung des Touch-Screens indiziert.

Eine Vorteilhafte Einstellung, die die Verwendung eines Stufenlosen Zooms ermöglicht, sieht vor, dass der Stellbereich und der Zoom-Stellbereich voneinander getrennt auf dem Touch-Screen angeordnet sind, dass die Steuerungseinheit bei Änderung der bei ihr anliegenden Berührungsinformation und Berührung des Touch-Screens im Zoom-Stellbereich auf einen eine Berührung indizierenden Wert die jeweiligen Zoom-Koordinatenwerte der Zeigeposition in einem Zoom-Zwischenspeicher als Zoom-Referenzposition zwischenspeichert und die Steuerungseinheit den momentan eingestellten Zoomwert oder die momentan eingestellte Brennweite der Kamera als Referenzzoom ermittelt und zwischenspeichert, dass die Steuerungseinheit, solange die bei ihr anliegenden Berührungsinformation einen eine Berührung indizierenden Wert aufweist, den Zoom-Richtungsvektor gemäß dZ = P - Z₀ von der gespeicherten Zoom-Referenzposition zur Zeigeposition ermittelt, und dass die Steuerungseinheit die Zoom-Stelleinheit der Kamera derart ansteuert, dass die Änderung des Zooms der Kamera gegenüber dem Referenzzoom proportional zu einer der Komponenten des Zoom-Richtungsvektors oder zu dem Skalarprodukt des Zoom-Richtungsvektors mit einem vorgegebenen Richtungsvektor ist.

Die Erfindung betrifft eine Vorrichtung zur Steuerung einer Kamera umfassend eine Anzeigeeinheit und eine berührungssensitive Oberfläche, wobei von der Kamera ein Bild aufgenommen und an den Touch-Screen übertragen und mindestens ein Teil des Bilds auf zumindest einem Teil der Anzeigeeinheit zur Anzeige gebracht wird, dass vom Touch-Screen ein Signal erstellt wird, dem eine Berührungsinformation zugeordnet wird, das angibt, ob der Touch-Screen berührt wurde und dem eine Zeigeposition zugeordnet wird, der bei Berührung zwei Koordinatenwerte zugewiesen werden, die angeben, an welcher Stelle der Touch-Screen berührt wurde, wobei das jeweilige vom Touch-Screen abgegebene Signal verarbeitet und an die Stelleinheiten zur Steuerung der Kamera weitergeleitet wird.

Erfindungsgemäß ist vorgesehen, dass bei Änderung der Berührungsinformation auf einen eine Berührung indizierenden Wert die jeweilige Zeigepositionen in einem Zwischenspeicher als Referenzposition abgespeichert werden, dass, solange die Berührungsinformation einen eine Berührung indizierenden Wert aufweist, der Richtungsvektor, gemäß dP = P - P₀ von der gespeicherten Referenzposition zur Zeigeposition ermittelt wird, und dass die Stelleinheiten der Kamera derart angesteuert werden, dass die Kamera die mit einer Drehgeschwindigkeit in horizontaler Richtung geschwenkt wird, proportional zu einer Komponente des Richtungsvektors ist und dass die Drehgeschwindigkeit in vertikaler Richtung proportional zu jeweils anderen Komponente des Richtungsvektors geschwenkt wird.

Eine einfache Möglichkeit zum Anhalten der Kamera sieht vor, dass bei Änderung der Berührungsinformation auf einen keine Berührung indizierenden Wert die Stelleinheiten deaktiviert werden und die Bewegung der Kamera gestoppt wird.

Eine Möglichkeit, die Kamera mit der eingestellten Geschwindigkeit weiterschwenken zu lassen, sieht vor, dass bei Veränderung der Berührungsinformation auf einen keine Berührung indizierenden Wert die Stelleinheiten mit der jeweils zuletzt eingestellten Drehgeschwindigkeit weiterbetrieben und/oder die Kamera mit der eingestellten Drehwinkelgeschwindigkeit weitergeschwenkt wird.

Eine vorteilhafte Ausgestaltung, die ein Vorteilhaftes Navigieren ermöglichst, wenn der Controller den Touch-Screen in der Hand hält oder mit beiden Händen hält und dies ermöglicht, den Touch-Screen ähnlich einem Game Controller zu bedienen, sieht vor, dass vom Touch-Screen abgegebene Signale nur dann berücksichtigt werden, wenn die dem Signal zugeordnete Zeigeposition innerhalb eines vorgegebenen Stellbereichs, vorzugsweise im rechten oder linken unteren Endbereich oder im rechten oder linken Randbereich des Touch-Screens liegt.

Eine vorteilhafte Steuerung des Zooms oder der Brennweite der Kamera sieht vor, dass der Zoom oder die Brennweite der Kamera mittels einer weiteren Stelleinheit einstellbar ist, und bei Vorliegen einer vorab vorgegebenen Betätigungshandlung die weitere Stelleinheit zur Einstellung des Zooms oder der Brennweite angesteuert wird.

Eine vorteilhafte, gemeinsame Steuerung von Kameraneigung und Zoom sieht vor, dass ein Zoomstellbereich auf dem Touch-Screen vorgegeben wird, der vorzugsweise im selben Bereich angeordnet wird, wie der Stellbereich oder zu diesem benachbart angeordnet wird, wobei insbesondere im Zoomstellbereich eine Anzahl von vorgegebenen Zoomstellabschnitten mit jeweils einer zugeordneten Zoomstufe vorgegeben werden und bei Berühren, insbesondere Antippen des Touch-Screens für eine einen vorgegebenen Schwellenwert unterschreitende Zeitspanne, vorzugsweise von weniger als eine Sekunde, der Zoomstellabschnitte die Zoom-Stelleinheit zur Einstellung einer dem jeweiligen Zoomabschnitt zugeordneten Zoomstufe angesteuert wird.

Eine vorteilhafte Weiterbildung der Erfindung zur Ansteuerung nach Art eines Game Controllers sieht vor, dass der Stellbereich und/oder der Zoombereich innerhalb eines kreisförmigen Bereichs, mit einem Radius von insbesondere maximal 10 cm, angeordnet werden, dessen Mittelpunkt, vorzugsweise im Rand- oder Eckbereich des Touch-Screens liegt oder dessen Mittelpunkt außerhalb des Touch-Screens liegt und zumindest 20% des kreisförmigen Bereichs innerhalb des Touch-Screens liegen.

Eine vorteilhafte Unterscheidung zwischen unterschiedlichen Eingaben sowie eine Abgrenzung einer Eingabe zur Steuerung der Neigung der Kamera von anderen Eingaben sieht vor, dass der Richtungsvektor an die Stelleinheit erst dann weitergeleitet wird, wenn der Touch-Screen nach der ersten Berührung für eine vorgegebene Zeitspanne, insbesondere für mehr als eine Sekunde, berührt wurde.

Eine Vorteilhafte Einstellung, die die Verwendung eines stufenlosen Zooms ermöglicht, sieht vor, dass der Stellbereich und der Zoomstellbereich voneinander getrennt auf den Touch-Screen angeordnet werden, dass bei Änderung der Berührungsinformation auf einen eine Berührung indizierenden Wert und Berührung des Touch-Screens im Zoomstellbereich die jeweiligen Koordinatenwerte der Zeigeposition in Zoomzwischenspeicher als Zoomreferenzposition zwischengespeichert werden und der momentan eingestellte Zoom oder die momentan eingestellte Brennweite der Kamera als Referenzzoomwert ermittelt und zwischengespeichert wird, und dass, solange die Berührungsinformation einen eine Berührung indizierenden Wert aufweist, der Zoomrichtungsvektor, gemäß dZ = P - Z₀, von der gespeicherten Zoomreferenzposition zur Zeigeposition ermittelt wird und dass mittels der Zoomstelleinheit die Kamera derart angesteuert wird, dass die Änderung des Zoomwerts der Kamera gegenüber dem Referenzzoomwert proportional zu einer der Komponenten des Zoomrichtungsvektors oder zu dem Skalarprodukt des Zoomrichtungsvektors mit einem vorgegebenen Richtungsvektor eingestellt wird.

Mehrere bevorzugte Ausführungsformen der Erfindung sind anhand der im Folgenden beschriebenen Zeichnungsfiguren näher dargestellt.

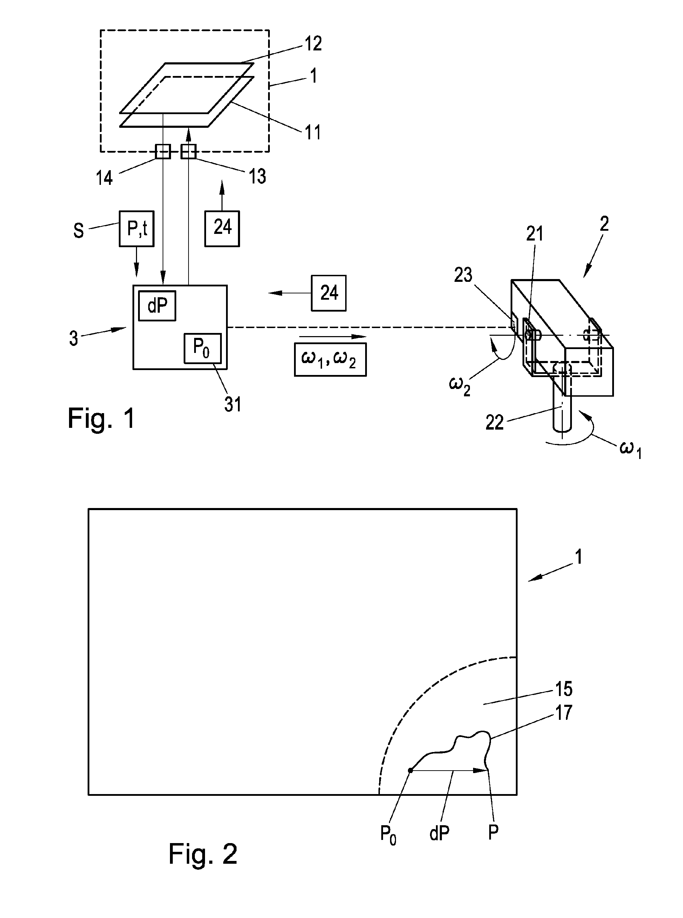

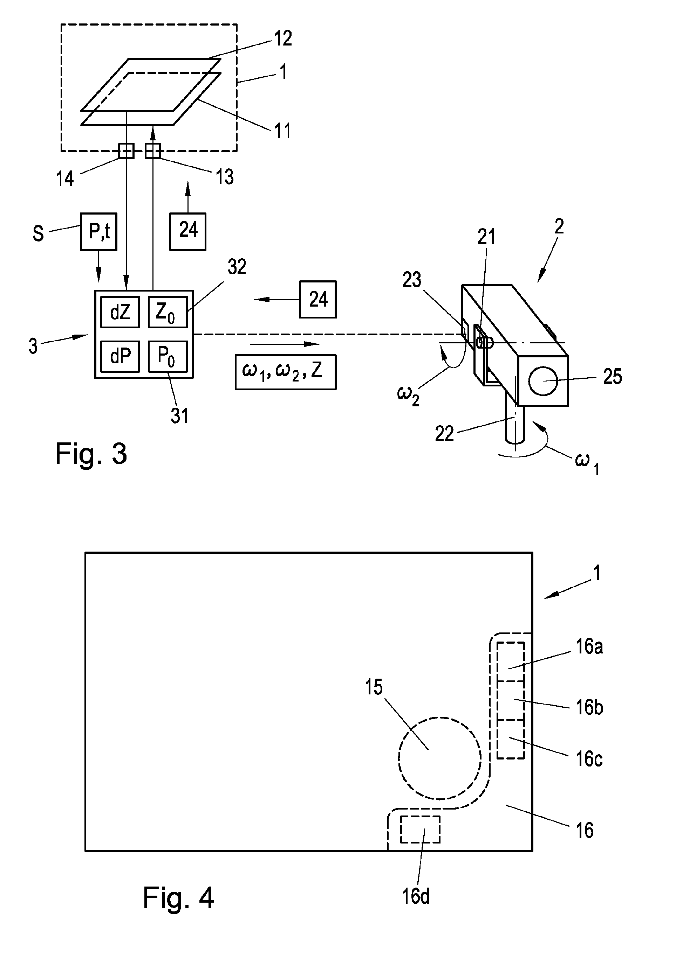

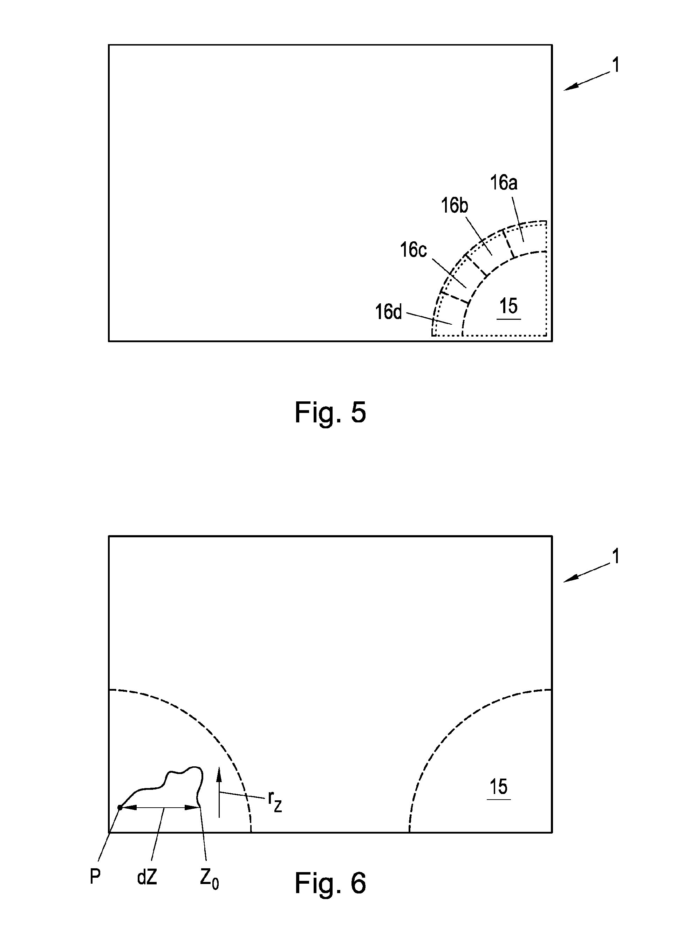

**Fig. 1** zeigt eine erste Ausführungsform der Erfindung, die eine Kamerasteuerung ermöglicht, bei der die Kamera mittels zweiter Stelleinheiten horizontal und vertikal neigbar ist. **Fig. 2** zeigt schematisch die Ermittlung der Drehgeschwindigkeit für die Neigung und Schwenkung der Kamera. **Fig. 3** zeigt eine alternative Ausführungsform der Erfindung mit einstellbarem Zoom. **Fig. 4** eine Möglichkeit, bei der der Zoom der Kamera in vier Zoomstufen einstellbar ist. **Fig. 5** zeigt eine alternative Möglichkeit, bei der der Zoom der Kamera in vier Zoomstufen einstellbar ist. **Fig. 6** zeigt schematisch eine alternative Ausführungsform der Erfindung, bei der der Zoom der Kamera stufenlos einstellbar ist.

In **Fig. 1** ist eine Vorrichtung zur Steuerung einer Kamera 2 dargestellt. Die Vorrichtung dient zur Steuerung einer von ihr umfassten Kamera 2. Diese Kamera 2 verfügt über eine oder mehrere Stelleinheiten 21, 22, mit der sie horizontal und vertikal neigbar ist. Im vorliegenden Fall verfügt die Kamera 2 über zwei Stelleinheiten 21, 22, die als Stellmotoren ausgebildet sind. Die Kamera 2 verfügt über einen Eingang, mit dem den beiden Steuerungseinheiten 21, 22 Stellbefehle zuführbar sind. Weiters weist die Kamera 2 einen Videoausgang 23 auf, an dem sie das von der Kamera 2 aufgenommene Bild 24 in Form eines Videosignals zur Verfügung stellt.

Der Touch-Screen 1 verfügt über eine Anzeigeeinheit 11 sowie über eine berührungssensitive Oberfläche 12. Weiters weist der Touch-Screen 1 einen Videoeingang 13 sowie einen Ausgang 14 auf, an dem ein Signal S anliegt, das die von der berührungssensitiven Oberfläche 12 detektierten Bedienhandlungen darstellt. Das Signal S weist einerseits eine Berührungsinformation t umfassend ein Berührungsbit auf, das angibt, ob der Touch-Screen 1 berührt wurde, andererseits weist das Signal S eine Zeigeposition P auf, die zwei Koordinatenwerte pₓ, py umfasst, wobei die Zeigeposition P diejenige Stelle auf dem Touch-Screen 1 angibt, die vom Benutzer jeweils berührt wurde. Sofern keine Berührung stattgefunden hat, können im Signal S die betreffenden Koordinatenwerte pₓ, py entweder überhaupt fehlen oder es werden jeweils die zuletzt ermittelten Koordinatenwerte in das Signal S eingetragen.

Die Kamera 2 ist über eine Steuerungseinheit 3 an den Touch-Screen 1 angeschlossen. Der Touch-Screen 1 zeigt in zumindest einem Teilbereich seiner Anzeigeeinheit 11 zumindest einen Teilbereich des von der Kamera 2 zuletzt aufgenommenen Bilds 24. Es ist jedoch auch möglich, andere als die zuletzt aufgenommenen Bilder 24 zu übertragen, beispielsweise wenn das Bild 24 der Kamera 2 eingefroren oder mit einer Verzögerung übermittelt wird. Die Steuerungseinheit 3 ist an den Ausgang 14 des Touch-Screens 1 angeschlossen. Der Steuerungseinheit 3 ist das am Ausgang des Touch-Screens 1 anliegende Signal S zugeführt. Weiters ist die Steuerungseinheit 3 der bzw. den Stelleinheit(en) 21, 22 der Kamera 2 vorgeschaltet.

In **Fig. 2** ist das konkrete Vorgehen bei der Einstellung der Position bzw. Drehgeschwindigkeit der Kamera 2 näher dargestellt. Die Steuerungseinheit 3 detektiert die Änderung des bei ihr anliegenden Berührungsbits. Sofern der Touch-Screen 1 berührt wurde, langt bei der Steuerungseinheit 3 ein eine Berührung indizierender Wert ein. Ist dies der Fall, ruft die Steuerungseinheit 3 auch die jeweiligen Koordinatenwerte pₓ, py der Zeigeposition P des Signals S ab und speichert diese in einem Zwischenspeicher 31 als Referenzposition P₀ ab. Solange das Berührungsbit des Signals S, das an die Steuerungseinheit 3 übermittelt wird, einen eine Berührung indizierenden Wert aufweist, ermittelt die Steuerungseinheit 3 jeweils einen Richtungsvektor dP gemäß der Vorschrift dP = P - P₀. Dieser Richtungsvektor dP entspricht der Differenz der gespeicherten Referenzposition P₀ zur Zeigeposition P und ist in **Fig. 2** schematisch dargestellt, wobei der von der Zeigeposition P durchlaufene Weg 17 in **Fig. 2** ebenfalls dargestellt ist.

Wie in **Fig. 1** dargestellt, wird der Richtungsvektor dP von der Steuerungseinheit 3 bestimmt. Anschließend erstellt die Steuerungseinheit 3 ein Stellsignal zur Einstellung der Stelleinheiten 21, 22 der Kamera 2 derart, dass die von der oder den Stelleinheit(en) 21, 22 vollführten Drehgeschwindigkeit in horizontaler Richtung proportional zu einer Komponente des Richtungsvektors dP ist, und dass die Drehgeschwindigkeit in vertikaler Richtung proportional zur jeweils anderen Komponente des Richtungsvektors dP ist.

Berührt der Benutzer die berührungssensitive Oberfläche 12 des Touch-Screens 1 an der mit P₀ bezeichneten Position und bewegt der Benutzer seinen Finger auf der berührungssensitiven Oberfläche 12 entlang des in **Fig. 2** dargestellten Bewegungspfads 17, so wird für jeden einzelnen, detektierten Punkt auf dem Bewegungspfad 17 jeweils separat der Richtungsvektor dP als Differenz zwischen der jeweiligen Zeigeposition und der Referenzposition ermittelt, den Stelleinheiten 21, 22 der Kamera 2 ein entsprechendes, proportionales Signal zugeführt und die Kamera 2 mit einer betreffenden Drehgeschwindigkeit gedreht, geschwenkt oder geneigt.

Bei einer besonders vorteilhaften, zweiten Ausführungsform der Erfindung, die in Fig. 3 dargestellt ist, verfügt die Kamera 2 zusätzlich über eine Zoom-Stelleinheit 25 zur Einstellung des Zooms bzw. der Brennweite der Kamera 2. Für die Einstellung eines Zoomwerts z können unterschiedliche Vorgehensweisen vorgesehen sein, wobei all diesen Vorgehensweisen gleich ist, dass aufgrund einer Berührung der berührungssensitiven Oberfläche 12 des Touch-Screens 1 die Steuerungseinheit 3 ein Zoomwert z ermittelt und diese an die Zoom-Stelleinheit 25 übermittelt, die anschließend den dem Zoomwert z entsprechenden Zoom bzw. die Brennweite der Kamera 2 einstellt.

Bei einer ersten möglichen Ausführungsform, dargestellt in **Fig. 4****,** der Erfindung ist ein Zoom-Stellbereich 16 umfassend eine Anzahl von vorgegebenen Zoom-Stellabschnitten 16a, 16b, 16c, 16d vorgegeben, wobei jeder der Zoom-Stellabschnitte 16a, 16b, 16c, 16d jeweils einer Zoomstufe Z zugeordnet ist. Der Zoom-Stellbereich 16 ist im vorliegenden Fall zur einfacheren Handhabung im selben Bereich angeordnet, wie der Stellbereich 15, wobei der Zoom-Stellbereich 16 und der Stellbereich 15 benachbart aneinander im rechten unteren Eck des Touch-Screens 1 anliegen. Analog ist es selbstverständlich auch möglich, den Zoom-Stellbereich 16 in einer anderen der Ecken oder in einem Seitenbereich des Touch-Screens 1 anzuordnen. Wird einer der Zoom-Stellabschnitte 16a, 16b, 16c, 16d vom Benutzer berührt, insbesondere kurz angetippt, wobei das Antippen vorzugsweise derart festgestellt wird, dass seine Berührung für eine einen vorgegebenen Schwellenwert unterschreitende Zeitspanne, vorzugsweise von weniger als einer Sekunde, ermittelt wird. In diesem Fall wird der entsprechende Zoom-Stellabschnitt 16a, 16b, 16c, 16d detektiert. Nach der Detektion des Berührens der Zoom-Stellabschnitte 16a, 16b, 16c, 16d wird die Zoom-Stelleinheit 25 zur Einstellung einer den jeweils ausgewählten Zoom-Stellabschnitt 16a, 16b, 16c, 16d zugeordneten Zoomstufe eingestellt.

In **Fig. 5** ist eine weitere mögliche Ausführungsform der Erfindung dargestellt, die eine ergonomische Einstellung des Zooms erlaubt. Der Stellbereich 15 ist im vorliegenden Fall viertelkreisförmig ausgebildet, wobei der Mittelpunkt des Viertelkreises im rechten unteren Eck des Touch-Screens 1 angeordnet ist. Es ist in diesem Zusammenhang selbstverständlich auch möglich, den Stellbereich 15 so anzuordnen, dass der Mittelpunkt des kreisförmigen Stellbereichs 15 außerhalb des Touch-Screens liegt, wobei lediglich erforderlich ist, dass ein Teil des kreisförmigen Bereichs innerhalb des Touch-Screens 1 liegt. Vorteilhaft ist es, wenn zumindest 20% des kreisförmigen Bereichs innerhalb des Touch-Screens 1 liegen. Der viertelkreisförmige Stellbereich 15 wird von vier mit ihm überlappenden oder von ihm umfassten Zoom-Stellabschnitten 16a, 16b, 16c, 16d überlagert. Bei einer Betätigung durch kurzes Antippen der jeweiligen Zoom-Stellabschnitte 16a, 16b, 16c, 16d wird die dem jeweiligen Zoom-Stellabschnitt 16a, 16b, 16c, 16d zugeordnete Zoomstufe z an die Zoom-Stelleinheit 25 weitergeleitet und bei der Kamera 2 der entsprechende Zoomwert z eingestellt.

Bei einem bewegungslosen Berühren des Stellbereichs 15 für eine Zeitspanne, die einen vorgegebenen Schwellenwert von insbesondere einer Sekunde übersteigt, wird angenommen, dass der Benutzer eine Ansteuerung der Neigung bzw. Schwenkung der Kamera 2 wünscht. Die Steuerungseinheit 3 leitet den laufend ermittelten Richtungsvektor dP beim vorliegenden Ausführungsbeispiel der Erfindung erst dann an die Stelleinheiten 21, 22 weiter, wenn der Touch-Screen 1 nach der ersten Berührung für eine vorgegebene Zeitspanne, insbesondere für mehr als eine Sekunde, berührt wurde.

In **Fig. 6** ist eine weitere bevorzugte Ausführungsform der Erfindung dargestellt, wobei die Steuerung der Kamera 2 durch Berührung des Touch-Screens 1 im Stellbereich 15 wie in **Fig. 5** vorgenommen wird. Wie in **Fig. 6** dargestellt, sind jedoch der Stellbereich 15 und der Zoom-Stellbereich 16 räumlich voneinander getrennt, wobei der Stellbereich 15 im rechten unteren Rand des Touch-Screens 1 und der Zoom-Stellbreich 16 im linken unteren Rand des Touch-Screens 1 angeordnet ist. Wird der Touch-Screen 1 im Zoom-Stellbereich 16 berührt und detektiert die Steuerungseinheit 3 eine Änderung des bei ihr anliegenden oder zu ihr übermittelten Berührungsbits des Signals S, so wird davon ausgegangen, dass der Benutzer eine Änderung des Zooms bzw. der Brennweite der Kamera 2 wünscht. Zeigt das Berührungsbit des Signals S einen eine Berührung indizierenden Wert, werden die jeweiligen Koordinatenwerte pₓ, py der Zeigeposition P in einem Zoom-Zwischenspeicher 32 **(****Fig. 3****)** als Zoom-Referenzposition Z₀ zwischengespeichert. Die Steuerungseinheit 3 ermittelt darüber hinaus den momentan eingestellten Zoomwert oder die momentan eingestellte Brennweite der Kamera 2 als Referenzzoom Z_{R} und speichert diesen ebenfalls in einem nicht dargestellten Speicher ab. Wie auch im Bezug auf **Fig. 5** dargestellt, kann es von Vorteil sein, wenn eine entsprechende Abspeicherung des Referenzzooms Z_{R} sowie der Zeigeposition P als Zoom-Referenzposition Z₀ erst dann vorgenommen wird, wenn der Benutzer seinen Willen zur Einstellung des Zooms durch eine entsprechend lange, einen vorgegebenen Schwellenwert übersteigende Berührung des Zoom-Stellbereichs 16 kundtut.

Solange das bei der Steuerungseinheit 3 anliegende Berührungsbit des Signals S einen eine Berührung indizierenden Wert aufweist, wird der Zoom-Richtungsvektor dZ gemäß dZ = P - Z₀ als Differenz der Zoom-Referenzposition Z₀ zur Zeigeposition P ermittelt. Die Steuerungseinheit 3 steuert die Zoom-Stelleinheit 25 der Kamera 2 derart an, dass die Änderung des Zooms der Kamera gegenüber dem Referenzzoom Z_{R} proportional zu einer der Komponenten des Zoom-Richtungsvektors dZ ist. Allgemeiner formuliert, kann die Ansteuerung derart erfolgen, dass die Differenz des eingestellten Zooms Z gegenüber dem Referenzzoom Z_{R} proportional zum Skalarprodukt des Zoom-Richtungsvektors dZ mit einem vorgegebenen Richtungsvektor r_{z} ist. Dieser Richtungsvektor r_{z} kann entweder normal zu einer der Koordinatenrichtungen stehen - dann reicht es aus, einen der beiden Komponenten des Zoom-Richtungsvektors dZ heranzuziehen - es ist aber auch möglich, den Richtungsvektor r_{z} beliebig innerhalb der Bildebene des Touch-Screens vorzugeben, sodass auch die Bildung eines Skalarprodukts des Zoom-Richtungsvektors dZ mit einem allgemein vorgegebenen Richtungsvektor für die Einstellung des Zoomwerts z möglich ist.

Bei sämtlichen Ausführungsformen der Erfindung bestehen grundsätzlich mehrere Möglichkeiten, wie zu verfahren ist, wenn der Benutzer seine Hand bzw. sein Finger von dem Touch-Screen nimmt. Eine Möglichkeit besteht darin, dass die Steuerungseinheit 3 bei Abheben des Fingers von dem Touch-Screen 1 die Stelleinheiten 21, 22 deaktiviert und stoppt, sodass nach Abheben des Fingers ein Standbild auf dem Touch-Screenbild 1 dargestellt wird. Detektiert die Steuerungseinheit 3 eine Änderung des bei ihr anliegenden Berührungsbits auf einem keine Berührung indizierenden Wert, stoppen die Stelleinheiten 21, 22 die Kamera.

Alternativ ist es auch möglich, dass sich die Kamera 2 in ihrer bisherigen Dreh-, Neige-und/oder Schwenkgeschwindigkeit weiterbewegt. Wenn also in diesem Fall die Steuerungseinheit 3 eine Änderung des bei ihr einlangenden Berührungsbits auf einem keine Berührung indizierenden Wert ermittelt, steuert sie die Stelleinheiten 21, 22 mit dem von der Steuerungseinheit 3 zuletzt eingestellten Drehgeschwindigkeiten weiter an.

## Patentansprüche

1. Vorrichtung zur Steuerung einer Kamera (2) umfassend
einen Touch-Screen (1) umfassend eine Anzeigeeinheit (11) und einen berührungssensitiven Bereich, insbesondere eine berührungssensitive Oberfläche (12), sowie einen Video-Eingang (13) und einen Ausgang (14), an dem ein Signal (S) anliegt, das eine Berührungsinformation (t) aufweist, die angibt, ob, und gegebenenfalls wie lange, der Touch-Screen (1) berührt wird oder wurde und eine Zeigeposition (P) umfassend zwei Koordinatenwerte (pₓ, py) aufweist, die angibt, an welcher Stelle der Touch-Screen (1) berührt wurde,
eine Kamera (2), die mittels einer oder mehrerer Stelleinheiten (21, 22), insbesondere mittels Stellmotoren, horizontal und vertikal neigbar ist, und die einen Video-Ausgang (23) aufweist, an dem das von der Kamera (2) aufgenommene Bild (24) in Form eines Videosignals zur Verfügung steht,
wobei die Kamera (2) an den Touch-Screen (1) angeschlossen oder diesem nachgeschaltet ist und der Touch-Screen (1) zumindest in einem Teilbereich seiner Anzeigeeinheit (11) zumindest einen Teilbereich des von der Kamera (2), insbesondere zuletzt, aufgenommenen Bilds (24) darstellt,
wobei eine Steuerungseinheit (3) vorgesehen ist, die an den Ausgang (14) des Touch-Screens (1) angeschlossen ist und der das jeweilige vom Touch-Screen (1) abgegebene Signal (S) zugeführt ist, und die Steuerungseinheit (3) der oder den Stelleinheiten (21, 22) vorgeschaltet ist und diese ansteuert,
**dadurch gekennzeichnet,**
- **dass** die Steuerungseinheit (3) bei Änderung der bei ihr anliegenden Berührungsinformation (t) auf einen eine Berührung indizierenden Wert die jeweiligen Koordinatenwerte (pₓ, py) der Zeigeposition (P) in einem Zwischenspeicher (31) als Referenzposition (P₀) abspeichert,
- **dass** die Steuerungseinheit (3), solange die bei ihr anliegende Berührungsinformation (t) einen eine Berührung indizierenden Wert aufweist, den Richtungsvektor (dP), gemäß dP = P - P₀ von der gespeicherten Referenzposition (P₀) zur Zeigeposition (P) ermittelt, und
- **dass** die Steuerungseinheit (3) die Stelleinheiten (21, 22) der Kamera (2) derart ansteuert, dass die von der oder den Stelleinheiten (21, 22) vollführte Drehgeschwindigkeit (w₁, w₂) in horizontaler Richtung proportional zu einer Komponente des Richtungsvektors (dP) ist und dass die Drehgeschwindigkeit (w₁, w₂) in vertikaler Richtung proportional zur jeweils anderen Komponente des Richtungsvektors (dP) ist.

2. Vorrichtung nach Anspruch 1, **dadurch gekennzeichnet, dass** die Steuerungseinheit (3) bei Änderung der bei ihr anliegenden Berührungsinformation (t) auf einen keine Berührung indizierenden Wert die Stelleinheiten (21, 22) deaktiviert und stoppt.

3. Vorrichtung nach Anspruch 1, **dadurch gekennzeichnet, dass** die Steuerungseinheit (3) bei Änderung der bei ihr anliegenden Berührungsinformation (t) auf einen keine Berührung indizierenden Wert die Stelleinheiten (21, 22) mit den von der Steuerungseinheit (3) zuletzt eingestellten Drehgeschwindigkeiten (w1, w2) weiter ansteuert.

4. Vorrichtung nach einem der vorangehenden Ansprüche, **dadurch gekennzeichnet, dass** die Steuerungseinheit (3) vom Touch-Screen (1) abgegebene Signale nur dann berücksichtigt, wenn die dem Signal zugeordnete Zeigeposition (P) innerhalb eines vorgegebenen Stellbereichs (15), vorzugsweise im rechten oder linken unteren Eckbereich oder im rechten oder linken Randbereich des Touch-Screens (1) liegt.

5. Vorrichtung nach einem der vorangehenden Ansprüche, **dadurch gekennzeichnet, dass** der Zoom oder die Brennweite der Kamera (2) einstellbar ist und eine Zoom-Stelleinheit (25) zur Einstellung des Zooms oder der Brennweite der Kamera (2) vorgesehen ist, wobei die Zoom-Stelleinheit (25) der Steuerungseinheit (3) nachgeschaltet ist und die Steuerungseinheit (3) das Vorliegen einer vorab vorgegebenen Betätigungshandlung anhand des Signals (S) detektiert und die Zoom-Stelleinheit (25) zur Einstellung einer Zoomstufe (z) ansteuert.

6. Vorrichtung nach Anspruch 5, **dadurch gekennzeichnet, dass** ein Zoom-Stellbereich (16) auf dem Touch-Screen (1) vorgegeben ist, der vorzugsweise im selben Bereich angeordnet ist wie der Stellbereich (15) oder zu diesem benachbart angeordnet ist, wobei im Zoom-Stellbereich (16) eine Anzahl von vorgegebenen Zoom-Stellabschnitten (16a, 16b, 16c, 16d) mit jeweils einer zugeordneten Zoomstufe (z) vorgegeben sind, und die Steuerungseinheit (3) das Berühren, insbesondere Antippen für eine einen vorgegebenen Schwellenwert unterschreitende Zeitspanne, vorzugsweise von weniger als einer Sekunde, der Zoom-Stellabschnitte (16a, 16b, 16c, 16d) detektiert und nach Detektion des Berührens einer der Zoom-Stellabschnitte (16a, 16b, 16c, 16d) die Zoom-Stelleinheit (25) zur Einstellung einer dem jeweiligen Zoom-Stellabschnitt (16a, 16b, 16c, 16d) zugeordneten Zoomstufe (z) ansteuert.

7. Vorrichtung nach einem der vorhergehenden Ansprüche, **dadurch gekennzeichnet, dass** der Stellbereich (15) und/oder der Zoom-Stellbereich (16) innerhalb eines kreisförmigen oder elliptischen Bereichs, mit einem Radius von insbesondere maximal 10 cm, angeordnet sind, wobei der Mittelpunkt des Bereichs vorzugsweise im Rand- oder Eckbereich des Touch-Screens (1) liegt oder dass der Mittelpunkt des Bereichs außerhalb des Touch-Screens (1) liegt und zumindest 20% des Bereichs jedoch innerhalb des Touch-Screens (1) liegen.

8. Vorrichtung nach einem der vorhergehenden Ansprüche, **dadurch gekennzeichnet, dass** die Steuerungseinheit (3) den Richtungsvektor (dP) an die Stelleinheit (21, 22) erst dann weiterleitet, wenn nach der ersten Berührung des Touch-Screens (1) für eine vorgegebene Zeitspanne, insbesondere für mehr als eine Sekunde, die Berührungsinformation (t) die Berührung des Touch-Screens (1) indiziert.

9. Vorrichtung nach einem der Ansprüche 7 oder 8, **dadurch gekennzeichnet,**
- **dass** der Stellbereich (15) und der Zoom-Stellbereich (16) voneinander getrennt auf dem Touch-Screen (1) angeordnet sind,
- **dass** die Steuerungseinheit (3) bei Änderung der bei ihr anliegenden Berührungsinformation (t) und Berührung des Touch-Screens (1) im Zoom-Stellbereich (16) auf einen eine Berührung indizierenden Wert die jeweiligen Koordinatenwerte (pₓ, py) der Zeigeposition (P) in einem Zoom-Zwischenspeicher (32) als Zoom-Referenzposition (Z₀) zwischenspeichert und die Steuerungseinheit (3) den momentan eingestellten Zoomwert oder die momentan eingestellte Brennweite der Kamera (2) als Referenzzoom (Z_{R}) ermittelt und zwischenspeichert,
- **dass** die Steuerungseinheit (3), solange die bei ihr anliegenden Berührungsinformation (t) einen eine Berührung indizierenden Wert aufweist, den Zoom-Richtungsvektor (dZ) gemäß
dZ = P - Z₀ als Differenz der gespeicherten Zoom-Referenzposition (Z₀) zur Zeigeposition (P) ermittelt, und
- **dass** die Steuerungseinheit (3) die Zoom-Stelleinheit (25) der Kamera (2) derart ansteuert, dass die Differenz des Zooms der Kamera (2) gegenüber dem Referenzzoom (Z₀) proportional zu einer der Komponenten des Zoom-Richtungsvektors (dZ) oder zu dem Skalarprodukt des Zoom-Richtungsvektors (dZ) mit einem vorgegebenen Richtungsvektor (r_{z}) ist.

10. Verfahren zur Steuerung einer mittels einer oder mehrerer Stelleinheiten (21, 22), insbesondere mittels Stellmotoren, horizontal und vertikal neigbaren Kamera (2) mit einem Touch-Screen umfassend eine Anzeigeeinheit (11) und eine berührungssensitive Oberfläche (12),
- wobei von der Kamera (2) ein Bild (24) aufgenommen und an den Touch-Screen (1) übertragen und mindestens ein Teil des Bilds (24) auf zumindest einem Teil der Anzeigeeinheit (11) zur Anzeige gebracht wird,
- dass vom Touch-Screen (1) ein Signal (S) erstellt wird, dem eine Berührungsinformation (t) zugeordnet wird, das angibt, ob der Touch-Screen (1) berührt wurde und dem eine Zeigeposition (P) zugeordnet wird, der bei Berührung zwei Koordinatenwerte (pₓ, py) zugewiesen werden, die angeben, an welcher Stelle der Touch-Screen (1) berührt wurde,
- wobei das jeweilige vom Touch-Screen (1) abgegebene Signal (S) verarbeitet und an die Stelleinheiten (21, 22) zur Steuerung der Kamera (2) weitergeleitet wird, **dadurch gekennzeichnet,**
- **dass** bei Änderung der Berührungsinformation (t) auf einen eine Berührung indizierenden Wert die jeweilige Zeigepositionen (P) in einem Zwischenspeicher (31) als Referenzposition (P₀) abgespeichert werden,
- **dass**, solange die Berührungsinformation (t) einen eine Berührung indizierenden Wert aufweist, der Richtungsvektor (dP), gemäß dP = P - P₀ von der gespeicherten Referenzposition (P₀) zur Zeigeposition (P) ermittelt wird, und
- **dass** die Stelleinheiten (21, 22) der Kamera (2) derart angesteuert werden, dass die Drehgeschwindigkeit (w₁), mit der die Kamera (2) in horizontaler Richtung geschwenkt wird, proportional zu einer Komponente des Richtungsvektors (dP) ist und dass die Drehgeschwindigkeit (w₂), mit der die Kamera (2) in vertikaler Richtung geschwenkt wird, proportional zur jeweils anderen Komponente des Richtungsvektors (dP) ist.

11. Verfahren nach Anspruch 10, **dadurch gekennzeichnet, dass** bei Änderung der Berührungsinformation (t) auf einen keine Berührung indizierenden Wert die Stelleinheiten (21, 22) deaktiviert werden und die Bewegung der Kamera (2) gestoppt wird.

12. Verfahren nach Anspruch 11, **dadurch gekennzeichnet, dass** bei Veränderung der Berührungsinformation (t) auf einen keine Berührung indizierenden Wert
- die Stelleinheiten (21, 22) mit der jeweils zuletzt eingestellten Drehgeschwindigkeit (w1, w2) weiterbetrieben und/oder die Kamera (2) mit der eingestellten Drehwinkelgeschwindigkeit (w1, w2) weitergeschwenkt wird.

13. Verfahren nach einem der Ansprüche 10 bis 12, **dadurch gekennzeichnet, dass** vom Touch-Screen (1) abgegebene Signale nur dann berücksichtigt werden, wenn die dem Signal zugeordnete Zeigeposition (P) innerhalb eines vorgegebenen Stellbereichs (15), vorzugsweise im rechten oder linken unteren Endbereich oder im rechten oder linken Randbereich des Touch-Screens (1) liegt.

14. Verfahren nach einem der vorangehenden Ansprüche, **dadurch gekennzeichnet, dass** der Zoom oder die Brennweite der Kamera (2) mittels einer weiteren Stelleinheit (25) einstellbar ist, und bei Vorliegen einer vorab vorgegebenen Betätigungshandlung die weitere Stelleinheit (25) zur Einstellung des Zooms oder der Brennweite angesteuert wird.

15. Verfahren nach Anspruch 14, **dadurch gekennzeichnet, dass** ein Zoomstellbereich auf dem Touch-Screen vorgegeben wird, der vorzugsweise im selben Bereich angeordnet wird, wie der Stellbereich (15) oder zu diesem benachbart angeordnet wird,
- wobei insbesondere im Zoomstellbereich (16) eine Anzahl von vorgegebenen Zoomstellabschnitten (16a, 16b, 16c, 16d) mit jeweils einer zugeordneten Zoomstufe vorgegeben werden und bei Berühren, insbesondere Antippen des Touch-Screens (1) für eine einen vorgegebenen Schwellenwert unterschreitende Zeitspanne, vorzugsweise von weniger als eine Sekunde, der Zoomstellabschnitte die Zoom-Stelleinheit (25) zur Einstellung einer dem jeweiligen Zoomabschnitt (16a, 16b, 16c, 16d) zugeordneten Zoomstufe angesteuert wird.

16. Verfahren nach Anspruch 14 oder 15, **dadurch gekennzeichnet, dass** der Stellbereich (15) und/oder der Zoombereich (16) innerhalb eines kreisförmigen oder elliptischen Bereichs, mit einem Radius von insbesondere maximal 10 cm, angeordnet werden, dessen Mittelpunkt, vorzugsweise im Rand- oder Eckbereich des Touch-Screens (1) liegt oder dessen Mittelpunkt außerhalb des Touch-Screens (1) liegt und zumindest 20% des kreisförmigen Bereichs innerhalb des Touch-Screens liegen.

17. Verfahren nach einem der Ansprüche 14 bis 16, **dadurch gekennzeichnet, dass** der Richtungsvektor (dP) an die Stelleinheit (21, 22) erst dann weitergeleitet wird, wenn der Touch-Screen (1) nach der ersten Berührung für eine vorgegebene Zeitspanne, insbesondere für mehr als eine Sekunde, berührt wurde.

18. Verfahren nach einem der Ansprüche 8 bis 17, **dadurch gekennzeichnet,**
- **dass** der Stellbereich (15) und der Zoomstellbereich (16) voneinander getrennt auf den Touch-Screen (1) angeordnet werden,
- **dass** bei Änderung der Berührungsinformation (t) auf einen eine Berührung indizierenden Wert und Berührung des Touch-Screens (1) im Zoomstellbereich (16) die jeweiligen Koordinatenwerte (pₓ, py) der Zeigeposition (P) in Zoomzwischenspeicher (32) als Zoomreferenzposition (Z₀) zwischengespeichert werden und der momentan eingestellte Zoom oder die momentan eingestellte Brennweite der Kamera (2) als Referenzzoomwert (z_{R}) ermittelt und zwischengespeichert wird, und
- **dass**, solange die Berührungsinformation (t) einen eine Berührung indizierenden Wert aufweist, der Zoomrichtungsvektor (dZ), gemäß dZ = P - Z₀, von der gespeicherten Zoomreferenzposition (Z₀) zur Zeigeposition (P) ermittelt wird und dass mittels der Zoomstelleinheit (23) die Kamera (2) derart angesteuert wird, dass die Änderung des Zoomwerts der Kamera (2) gegenüber dem Referenzzoomwert (z_{R}) proportional zu einer der Komponenten des Zoomrichtungsvektors (dZ) oder zu dem Skalarprodukt des Zoomrichtungsvektors (dZ) mit einem vorgegebenen Richtungsvektor (r_{z}) eingestellt wird.
